# EUROPÄISCHE PATENTSCHRIFT

(11) **EP 1 380 791 B1**
(45) Veröffentlichungstag und Bekanntmachung des Hinweises auf die Patenterteilung: **26.10.2005**
(21) Anmeldenummer: 03014899.3
(22) Anmeldetag: 01.07.2003
(51) Int. Cl.: F16L 37/098

(54) **Steckkupplung zum Verbinden zweier Fluidleitungen**
Plug-in connector for connection of two fluid conduits
Raccord emboitable pour connecter deux conduites de liquide

(30) Priorität: 09.07.2002 DE 10230747
(43) Veröffentlichungstag der Anmeldung: 14.01.2004
(73) Patentinhaber: Rasmussen GmbH, 63477 Maintal (DE)
(72) Erfinder: Bauer, Andreas, 63936 Schneeberg (DE); Bock, Gerhard, 63538 Grosskrotzenburg (DE); Rücker, Marcus, 63486 Bruchköbel (DE)
(74) Vertreter: Knoblauch, Andreas

(56) Entgegenhaltungen:
- EP-A- 0 505 930
- EP-A- 0 846 907
- US-A- 5 785 358
- US-B1- 6 173 998

## Beschreibung

Die Erfindung bezieht sich auf eine Steckkupplung zum Verbinden zweier Fluidleitungen, von denen wenigstens die eine Fluidleitung eine Halterippe aufweist, mit einer Hülse, die radiale Durchbrüche aufweist, mit einer in der Hülse axial verschiebbar geführten Rasteinrichtung, die an einem Ring sich axial erstreckende Rastarme mit einem am freien Ende ausgebildeten.Haken zum Hintergreifen der Halterippe jener einen in die Rasteinrichtung axial eingeführten Fluidleitung aufweist, wobei die Haken an ihrem freien Ende eine radial äußere Schrägfläche, die beim Auseinanderbewegen von Hülse und Rasteinrichtung gegen eine innere Vorderkante eines einen radial äußeren Teil des Hakens axial verschiebbar aufnehmenden Durchbruchs der Hülse gedrückt wird, und eine radial innere Schrägfläche aufweisen, die mit der Halterippe beim Auseinanderziehen von Rasteinrichtung und Hülse bei eingeführter Fluidleitung zur Anlage kommt, so daß die Rastarme in einer in die Hülse axial zurückgezogenen Entriegelungslage der Rasteinrichtung, in der die Haken mit ihrer radial äußeren Schrägfläche nicht gegen die vordere Kante des betreffenden Durchbruchs gedrückt sind, gespreizt werden und ein Entkuppeln ermöglichen.

Dokument US 6 173 998 zeigt eine Steckkupplung gemäß dem Oberbegrift des Anspruchs 1.

Bei einer bekannten Steckkupplung dieser Art (DE 198 31 897 A1) erfolgt das Einführen der einen Fluidleitung in die Hülse mitunter, bei nicht sorgfältiger Handhabung, nicht soweit, daß die Haken der Rastarme die Halterippe hintergreifen. Wenn die Steckkupplung in einem Kraftfahrzeug verwendet wird, würde sich dies erst bei einem Druckaufbau in den vermeintlich durch die Steckkupplung verbundenen Fluidleitungen herausstellen, indem sich die Fluidleitungen trennen und das Fluid ausströmt. Bei einem Fluid wie Kühlwasser, Kraftstoff oder Bremsöl kann dies zu erheblichen Schäden führen.

Der Erfindung liegt die Aufgabe zugrunde, eine Steckkupplung der eingangs genannten Art anzugeben, die zu erhöhter Sorgfalt beim Zusammenkuppeln zwingt.

Diese Aufgabe wird dadurch gelöst, daß eine etwa U-förmige, elastische Klammer, die an ihren Schenkeln mit je einem Vorsprung versehen ist, in der Entriegelungslage der Rasteinrichtung so auf die Hülse aufgesetzt ist, daß ihre Vorsprünge in jeweils einen der Durchbrüche bis in den Bereich zwischen der inneren Vorderkante der Durchbrüche und der Schrägfläche der Rastarme ragen.

Dokument EP 0 505 930 zeigt eine Indikationsklammer nach Anspruch 1, allerdings reicht bei der in diesem Dokument beschriebenen Steckkupplung schon ein richtiges Einführen der Fluidleitung, um die Indikationsklammer abziehen zu können.

Bei der erfindungsgemäßen Lösung wird der Monteur, der die Verbindung mittels der Steckkupplung herstellen soll, verpflichtet, nach dem Einführen der mit der Halterippe versehenen Fluidleitung in die Hülse bzw. nach dem Zusammenstecken der beiden Teile, die Fluidleitung zurückzuziehen, wie wenn er sie durch Herausziehen aus der Hülse wieder entkuppeln wollte. Wenn sie richtig eingekuppelt ist, d.h. die Halterippe mit den Rastarmen verrastet ist, läßt sich die Fluidleitung nicht wieder völlig herausziehen, ohne die Verbindung auf vorschriftsmäßige Weise zu lösen. Zum Beweis bzw. als Anzeichen dafür, daß der Monteur diesen Entkupplungsversuch durchgeführt hat, muß er die Klammer von der Hülse abziehen. Die Klammer läßt sich jedoch nur dann abziehen, wenn er die Fluidleitung richtig eingeführt und beim Zurückziehen die Rastvorrichtung bis zum Anschlag der Schrägflächen der Rastarme an der Innenkante der Durchbrüche zurückgezogen hat, weil die Schrägflächen der Rastarme dabei gegen die Vorsprünge an den Schenkeln der Klammer drükken und die Schenkel soweit aufspreizen, daß die Vorsprünge mit den Durchbrüchen durch Abziehen der Klammer von der Hülse außer Eingriff gebracht werden können. Wenn die Fluidleitung dagegen nicht soweit in die Hülse eingeführt wurde, daß die Halterippe mit den Rastarmen verrasten konnte, läßt sich die Fluidleitung wieder aus der Hülse herausziehen, aber die Klammer nicht von der Hülse abziehen, weil ihre Vorsprünge weiterhin mit den Durchbrüchen in Eingriff bleiben, da die Rastarme mangels Verrastung mit der Halterippe nicht bis zum Anschlag ihrer Schrägflächen mit vorgezogen wurden. Wenn die Klammer nach dem Einführen der mit der Halterippe versehenen Fluidleitung in die Hülse entfernt ist, stellt dies bei einer Nachprüfung vor der Inbetriebnahme, z.B. eines mit der Steckkupplung ausgerüsteten Kraftfahrzeugs, ein deutlich sichtbares Anzeichen für den vorschriftsmäßigen Einkuppelungszustand dar.

Vorzugsweise ist dafür gesorgt, daß die Vorsprünge der Klammer an derjenigen Seite, die dem die beiden Schenkel verbindenden Querteil zugekehrt ist, ein Widerlager zur Anlage an der einen Wand der Durchbrüche und eine sich daran anschließende Auflaufschräge zum Hochgleiten der Vorsprünge auf dem äußeren Rand dieser Wand beim Abziehen der Klammer von der Hülse aufweisen. Das Widerlager erschwert das Abziehen der Klammer von der Hülse vor dem Aufspreizen ihrer Schenkel, während die Auflaufschräge das Abziehen nach dem Aufspreizen der Schenkel erleichtert.

Das Widerlager kann zusammen mit der Auflaufschräge eine spitze Kante bilden. Die spitzen Kanten an den Vorsprüngen erschweren das Abziehen der Klammer vor dem Aufspreizen der Schenkel noch mehr, weil die Kanten den Reibungswiderstand zwischen sich und der betreffenden Wand der Durchbrüche erhöhen.

Die den Schrägflächen der Rastarme zugekehrten Seiten der Vorsprünge können ebenfalls als Auflaufschrägen ausgebildet sein. Diese Auflaufschrägen erleichtern das Aufspreizen der Schenkel der Klammer durch die Schrägflächen der Rastarme.

Vorzugsweise ist das die beiden Schenkel der Klammer verbindende Querteil mit einem Griff versehen. Der Griff erleichtert das Abziehen der Klammer von Hand.

Sodann kann dafür gesorgt sein, daß die Schenkel und das sie verbindende Querteil der Klammer jeweils mit einem L-förmigen Ansatz versehen sind, dessen einer Abschnitt sich senkrecht zur Ebene der Klammer und dessen anderer Abschnitt sich parallel zu dieser Ebene erstreckt und bei auf die Hülse aufgesetzter Klammer am freien Ende der Hülse anliegt. Die L-förmigen Ansätzen stellen das Aufsetzen der Klammer in einer definierten Lage und die Einhaltung dieser Lage sicher.

Ferner ist es günstig, wenn die Klammer Kunststoff aufweist und eine andere Farbe als die übrigen Kupplungsteile hat. Dieses Material der Klammer erleichtert ihre Herstellung und das Überprüfen des Kupplungszustandes.

Die Erfindung und ihre Weiterbildungen werden nachstehend anhand der beigefügten Zeichnung eines bevorzugten Ausführungsbeispiels beschrieben. Darin stellen dar:
- Fig. 1: den Axialschnitt I-I der Fig. 4 einer erfindungsgemäßen Steckkupplung mit einer in die Steckkupplung eingeführten Fluidleitung in Form eines Rohrstutzens mit Halterippe und einer auf das gegenüberliegende Ende der Steckkupplung fest aufgesteckten Fluidleitung in einer Lage, in der die Fluidleitungen durch die Steckkupplung fest verbunden sind,
- Fig. 2: den gleichen Axialschnitt wie den nach Fig. 1, jedoch in einer etwas vorgezogenen Lage der eingeführten Fluidleitung, bei einem Versuch, sie in dem eingekuppelten Zustand zu entkuppeln,
- Fig. 3: eine Seitenansicht der Steckkupplung in dem Kupplungszustand nach Fig. 2, jedoch in einer gegenüber der Schnittebene der Fig. 2 um 90° gedrehten Lage,
- Fig. 4: den Schnitt IV-IV der Fig. 2,
- Fig. 5: den Schnitt V-V der Fig. 1,
- Fig. 6: eine Rasteinrichtung der in den Fig. 1 bis 5 dargestellten Steckkupplung im Axialschnitt,
- Fig. 7: die Rasteinrichtung nach Fig. 6 in einem gegenüber dem Axialschnitt nach Fig. 6 um 90° gedrehten Axialschnitt,
- Fig. 8: eine Seitenansicht einer als Indikator für den Kupplungszustand der Steckkupplung dienenden, etwa U-förmigen Klammer,
- Fig. 9: eine Vorderansicht der Klammer nach Fig. 8,
- Fig. 10: eine Rückansicht der Klammer nach Fig. 8 und
- Fig. 11: eine Unteransicht der Klammer nach Fig. 8.

Die dargestellte Steckkupplung dient zum Verbinden einer Fluidleitung 1 in Form eines Rohrstutzens, der eine außen umlaufende Halterippe 2 aufweist und am Gehäuse 3 eines Kraftfahrzeugkühlers angeformt ist, mit einer Fluidleitung 4 in Form eines Schlauches aus Kunststoff. Die Steckkupplung besteht aus einer zylindrischen Hülse 5, einer Rasteinrichtung 6, zwei Dichtungsringen 7 und 8 in Form von O-Ringen mit einem dazwischen angeordneten Sicherungsring 9 und gegebenenfalls einer spannbaren Schlauchschelle 10, Klemmhülse oder dergleichen Klemme, die um die Fluidleitung 4 herumgelegt ist und diese auf einem gerippten Endabschnitt 11 der Hülse 5 festklemmt. Zusätzlich ist ein O-Ring zwischen dem gerippten Endabschnitt 11 und der Fluidleitung 4 vorgesehen. Dieser O-Ring kann aber auch entfallen.

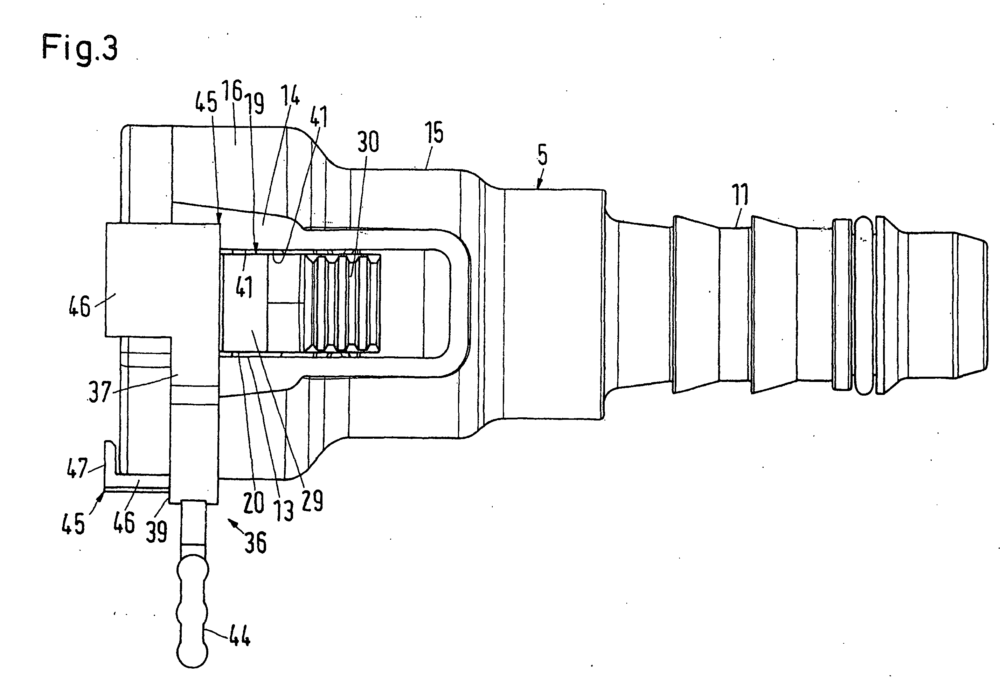

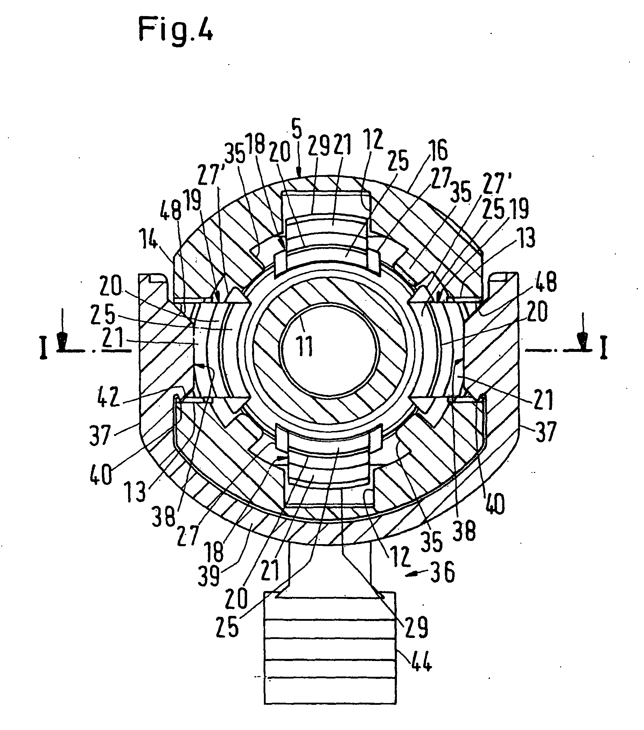

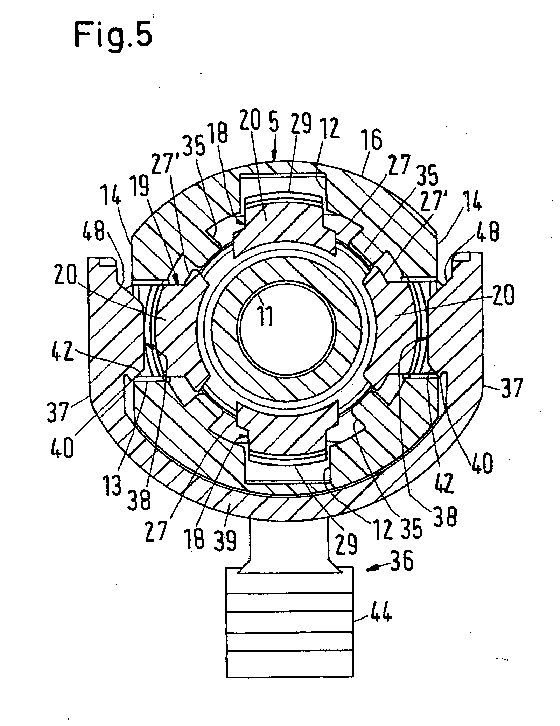

Der andere Endabschnitt der Hülse 5 hat innen zwei viereckige, sich diametral gegenüberliegende Vertiefungen 12 (Fig. 4 und 5) und dazwischen zwei sich diametral gegenüberliegende Durchbrüche 13 in Form von Rechtecken, die sich ebenso wie die Vertiefungen 12 in Längsrichtung der Hülse 5 erstrecken. Der die Vertiefungen 12 und Durchbrüche 13 aufweisende Endabschnitt der Hülse 5 hat einen größeren Durchmesser als der angrenzende Abschnitt der Hülse 5, der die Ringe 7, 8 und 9 aufnimmt, während der am Endabschnitt 11 angrenzende Abschnitt der Hülse 5 einen Innendurchmesser aufweist, der etwa gleich dem Außendurchmesser der Fluidleitung 1 ist, und der Innendurchmesser des Endabschnitts. 11 gleich dem Innendurchmesser der Fluidleitung 1 ist. Wie die Fig. 3 zeigt, hat die Hülse 5 außen beiderseits jedes Durchbruchs 13 eine sich parallel zur Längsachse der Hülse 5 erstreckende Abflachung 14. In Umfangsrichtung beiderseits der Abflachung 14 hat die Hülse 5 zylindrische Oberflächen 15 und 16 mit unterschiedlichen Durchmessern, wobei die am Ende der Hülse 5 angrenzte Oberfläche 16 einen minimal größeren Durchmesser als die Oberfläche 15 hat.

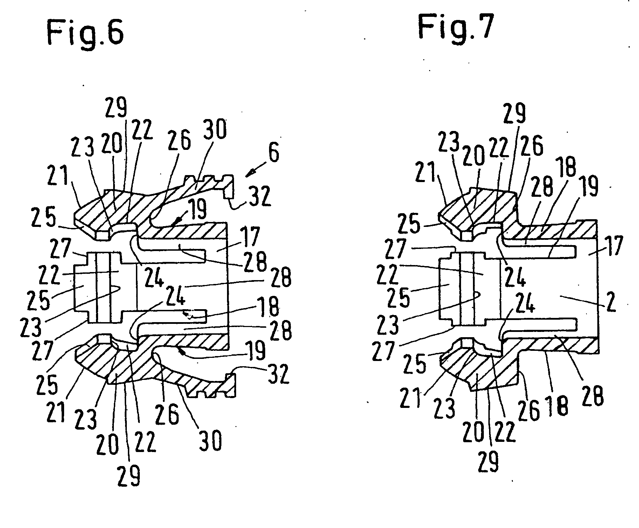

Wie insbesondere die Fig. 6 und 7 zeigen, besteht die Rasteinrichtung 6 aus einem geschlossenen Ring 17 und zwei daran axial angeformten, elastisch biegsamen, nur als Haltearme dienenden Rastarmen 18 sowie zwei daran angeformten, elastisch biegsamen, als Halte- und Entriegelungsarme dienenden Rastarmen 19. Die Rastarme 18 und 19 haben am freien Ende jeweils einen Haken 20 zum Hintergreifen der Halterippe 2, wenn die Fluidleitung 1 in die Rasteinrichtung 6 axial eingeführt ist. An ihrem freien Ende haben die Haken 20 eine radial äußere Schrägfläche 21 und auf ihrer radial inneren Seite eine Ausnehmung 22, die auf ihrer axial äußeren Innenseite durch eine radial innere Schrägfläche 23 in gewölbter Form und auf ihrer axial inneren Innenseite durch eine radiale Fläche 24 begrenzt und so bemessen ist, daß sie die Halterippe 2 unabhängig von der Toleranz der axialen Halterippenbreite spielfrei aufnehmen kann. Außerdem hat jeder Haken 20 eine an sein freies Ende angrenzende radial innere Schrägfläche 25 und eine dem axial vorderen Ende abgekehrte Anlagefläche 26 zum Anlegen an einen hinteren Rand der betreffenden Vertiefung 12 bzw. des betreffenden Durchbruchs 13 zur Einschubbegrenzung der Rasteinrichtung 6. Schließlich sind die Rastarme 18 und 19 am vorderen Ende des Hakens 20 mit jeweils einem seitlichen Vorsprung 27 bzw. 27' zur Anlage an der Innenseite der Hülse 5 versehen. Die radial innere Fläche 28 der Rastarme 18 und 19 ist teilzylindrisch und hat einen dem Durchmesser der Fluidleitung 1 entsprechenden Durchmesser.

Die Rastarme 19 liegen zwischen den Rastarmen 18, wobei die Rastarme 18 und 19 in gleichen Winkelabständen über den Umfang der im wesentlichen zylindrischen Rasteinrichtung 6 verteilt sind, so daß sich die beiden Rastarme 18 mit ihren Haken 20 ebenso wie die Rastarme 19 mit ihren Haken 20 diametral in bezug auf die Längsachse der Hülse 5 bzw. der Rasteinrichtung 6 gegenüberliegen. Während radial äußere Teile 29 der Haken 20 der Rastarme 18 lediglich in die Vertiefungen 12 der Hülse 5 hineinragen und in den Durchbrüchen 13 axial verschiebbar sind, ragen radial äußere Teile 29 der Haken 20 der Rastarme 19 durch die Durchbrüche 13 nach außen. An der Hinterseite der Haken 20 der Rastarme 19 sind Federarme 30 angeformt, die sich weitgehend in Axialrichtung über die Außenseite der Hülse 5 hinweg erstrecken und radial über die zylindrische Oberfläche 15 hinausragen. Die Außenseite der radial äußeren Teile 29 der Rastarme 19 liegt dagegen auf einem Umkreis, dessen Durchmesser kleiner als der der Oberfläche 16 ist. Auch die radial äußeren Teile 29 und die Haken 20 sind axial innerhalb der sie aufnehmenden Durchbrüche 13 verschiebbar.

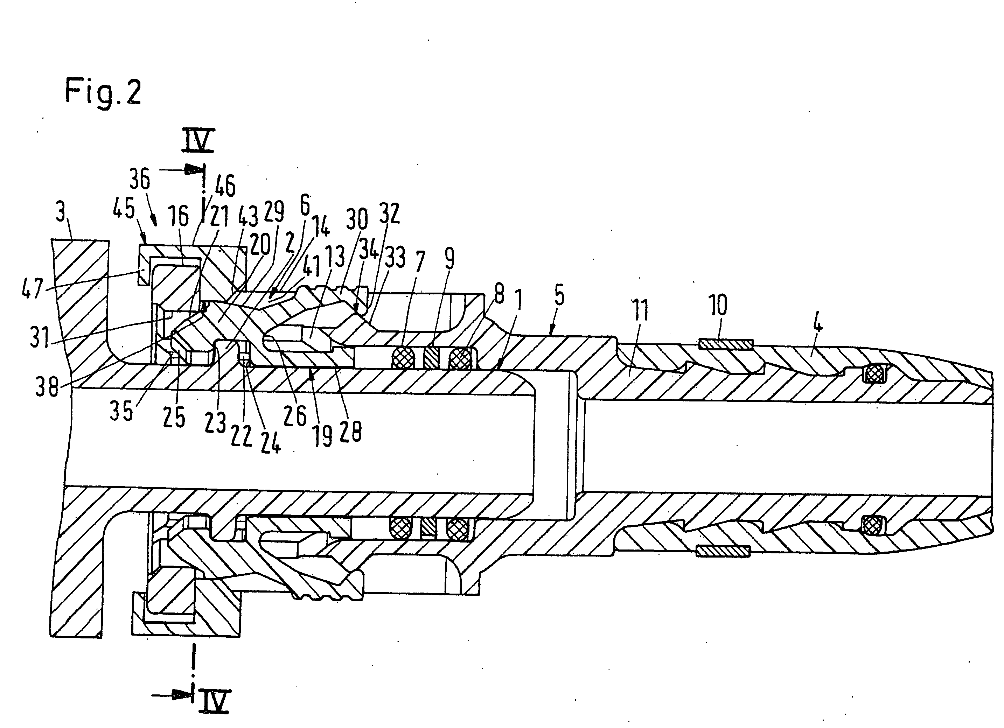

Jeder der axial von der Einführungsöffnung 31 der Hülse 5 nach hinten gerichteten Federarme 30 hat einen radial nach innen gerichteten ersten Vorsprung 32, der in einer Verriegelungslage der Rastarme 18, 19, in der sie bis gegen die vordere Innenkante der Vertiefungen 12 und Durchbrüche 13 vorgezogen sind, wie es in Fig. 2 dargestellt ist, über einer Schrägfläche 33, hier der schrägen Rückflanke, eines Vorsprungs 34 auf der Außenseite der Hülse 5 liegt.

Die Federarme 30 sind ferner auf ihrer radial äußeren Seite mit einer Profilierung in Form von Rippen versehen, um sie griffig zu machen.

Die Hülse 5 hat ferner auf der Innenseite sich axial erstreckende, an der Halterippe 2 der durch die Einführungsöffnung 31 der Hülse 5 in die Rasteinrichtung 6 eingeführten Fluidleitung 1 anliegende Rippen 35 zwischen den Rastarmen 18 und 19 der Rasteinrichtung 6. Diese Rippen 35 verhindern weitgehend eine seitliche Auslenkung der in die Steckkupplung eingeführten Fluidleitung 1, weil die Fluidleitung 1 durch die an den axialen Rippen 35 anliegende Halterippe 2 zum einen näher bei der Einführungsöffnung 31 der Hülse 5 und zum anderen unnachgiebig abgestützt wird. Die Belastung der Dichtringe 7, 8 nimmt erheblich ab. Sie haben daher eine erheblich höhere Lebensdauer. Die Dichtheit bleibt auch bei hohen Querkräften, insbesondere bei tiefen Temperaturen bis zu -40°C, erhalten. Die axialen Rippen 35 bewirken ferner eine bessere Führung beim Einführen der Fluidleitung 1 in die Steckkupplung: Die Fluidleitung 1 kann beim Einführen nicht gegen die Stirnfläche der Haltearme 18 oder 19 stoßen, wie im Falle einer Einführung in ausgewinkelter Lage, so daß auch nicht der Eindruck entsteht, daß der Kupplungsvorgang abgeschlossen sei, obwohl noch keine Verriegelung stattgefunden hat. Durch die axialen Rippen 35 wird die Hülse 5 darüber hinaus versteift. Dadurch erhöhen sich die Abzugskräfte, so daß die Verbindung höheren Axialbelastungen standhält. Die Anlage der Halterippe 2 an den axialen Rippen 35 ergibt eine größere Berührungsfläche und damit einen geringeren Übergangswiderstand, so daß elektrostatische Ladungen besser abgeleitet werden.

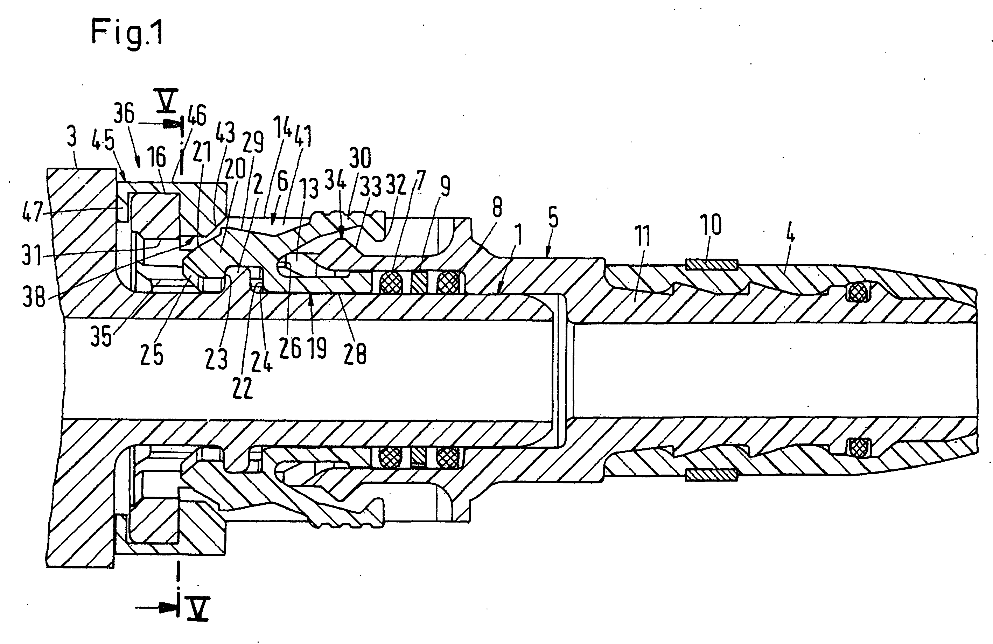

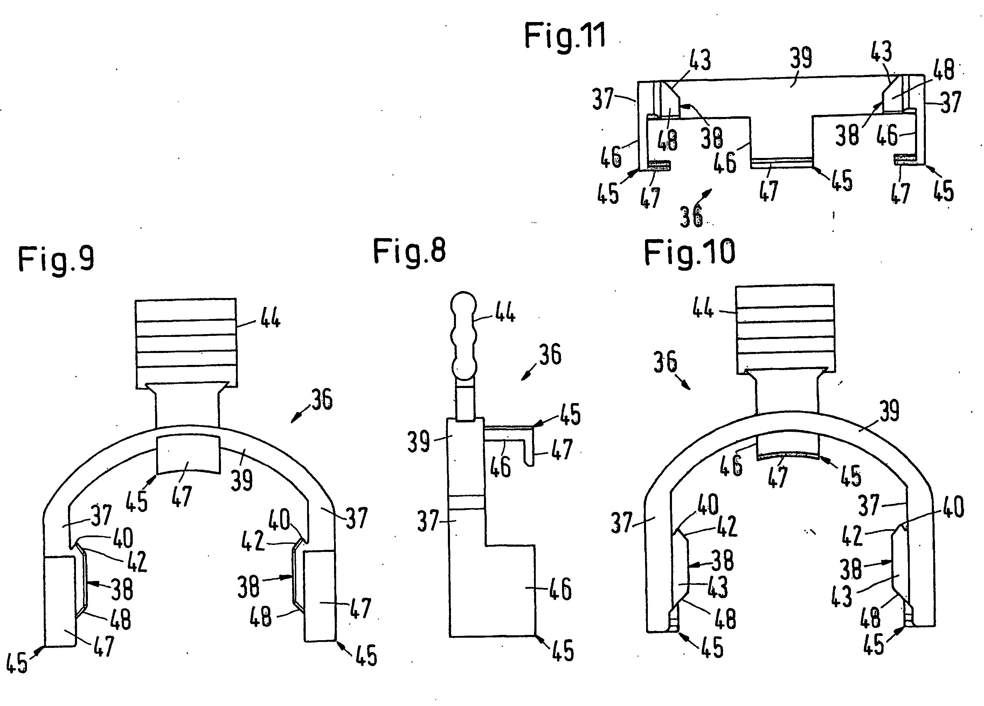

Erfindungsgemäß gehört zu der soweit beschriebenen Steckkupplung eine etwa U-förmige Klammer 36, die in den Fig. 8 bis 11 einzeln in verschiedenen Ansichten dargestellt und auf der Hülse 5 aufsetzbar bzw. aufgesetzt ist, wie es in den Fig. 1 bis 5 dargestellt ist. Die Klammer 36 ist an ihren Schenkeln 37 mit je einem Vorsprung 38 versehen. Die Vorsprünge 38 ragen in der Entriegelungslage der Rasteinrichtung 6 nach Fig. 1 in jeweils einen der Durchbrüche 13 bis in den Bereich zwischen der inneren-Vorderkante der Durchbrüche 13 und der Schrägfläche 21 der Rastarme 19. Die Vorsprünge 38 weisen an derjenigen Seite, die dem die beiden Schenkel 37 verbindenden Querteil 39 zugekehrt ist, ein Widerlager 40 zur Anlage an der einen Wand 41 der Durchbrüche und eine sich daran anschließende Auflaufschräge 42 zum Hochgleiten der Vorsprünge 38 auf dem äußeren Rand dieser Wand 41 beim Abziehen der Klammer 36 von der Hülse 5 auf. Das Widerlager 40 bildet zusammen mit der Auflaufschräge 42 eine spitze Kante. Das Querteil 39 ist mit einem nach außen ragenden Griff 44 versehen. Die Schenkel 37 und das Querteil 39 sind jeweils mit einem L-förmigen Ansatz 45 versehen, dessen einer Abschnitt 46 sich senkrecht zur Ebene der Klammer 36 und dessen anderer Abschnitt 47 sich parallel zu dieser Ebene in Richtung auf das freie Ende der Schenkel 37 erstreckt und bei auf die Hülse 5 aufgesetzter Klammer 36 am freien Ende der Hülse 5 anliegt. Die Klammer 36 weist Kunststoff auf und hat eine andere Farbe als die übrigen Kupplungsteile.

Nachstehend wird die Wirkungsweise der in den Fig. 1 bis 5 dargestellten Steckkupplung zunächst ohne die aufgesetzte Klammer 36 näher beschrieben.

Um die Fluidleitungen 1 und 4 zu verbinden, wird die Steckkupplung mit der daran gemäß Fig. 1 angeschlossenen Fluidleitung 4 auf die Fluidleitung 1 aufgesteckt. Dabei wird die Halterippe 2 gegen die Schrägflächen 25 der Haken 20 gedrückt, wodurch zum einen die Rastarme 18 und 19 radial nach außen gespreizt werden und zum anderen die gesamte Rasteinrichtung 6 so weit in die Hülse 5 hineingedrückt wird, bis die Anlageflächen 26 der Rastarme 18 und 19 an dem hinteren Rand der Vertiefungen 12 bzw. der Durchbrüche 13 anliegen.

Durch weiteres Zusammenschieben der Steckkupplung und der Fluidleitung 1 übergreifen die Rastarme 18 und 19 schließlich mittels der Haken 20 die Halterippe 2, da die Rastarme aufgrund ihrer durch die Spreizung erhaltenen Vorspannung in die dargestellte Lage zurückfedern.

Wenn sich in den Fluidleitungen 1 und 4 ein hoher Druck aufbaut, bewirkt dessen Axialkomponente, daß die Hülse 5 und die Fluidleitung 1 axial auseinandergezogen werden. Hierbei stoßen jedoch die Schrägflächen 21 der Rastarme 18 und 19 gegen die vordere Innenkante der Vertiefungen 12 bzw. Durchbrüche 13, so daß die Haken 20 noch fester gegen die Halterippe 2 gedrückt werden, wie es in Fig. 2 dargestellt ist.

Um die Verbindung der Fluidleitungen 1 und 4 zu trennen, können die Federarme 30 in der normalen Verbindungslage nach Fig. 2 mittels Daumen und Zeigefinger einer Hand radial nach innen gedrückt werden. Dabei gleiten die Vorsprünge 32 der Federarme 30 an der Schrägfläche 33 der Vorsprünge 34 mit einer radialen und axialen Bewegungskomponente entlang. Die axiale Bewegungskomponente bewirkt eine Relativbewegung zwischen der Hülse 5 und der Rasteinrichtung 6 in die Entriegelungslage nach Fig. 1, in der die Rastarme 18 und 19 durch axiales Auseinanderziehen der Fluidleitung 1 und der Steckkupplung durch die Halterippe 2 radial gespreizt werden können, so daß die Fluidleitungen 1 und 4 danach durch weiteres axiales Auseinanderziehen der Fluidleitung 1 und der Steckkupplung getrennt werden können.

In der Entriegelungslage nach Fig. 1 stellen die weiterhin mit der Hand in der Lage nach Fig. 2 festgehaltenen, einander hintergreifenden Vorsprünge 32 und 34 sicher, daß die Hülse 5 und die Rasteinrichtung 6 beim Entkuppeln nicht axial auseinandergezogen werden.

Die Art der Bedienung der Steckkupplung, insbesondere um die Fluidleitungen 1 und 4 zu entkuppeln bzw. zu trennen, ist daher auch für einen Uneingeweihten augenfällig und bedarf keiner näheren Erläuterungen. Demzufolge ist die Steckkupplung insgesamt, sowohl zum Verbinden als auch zum Trennen der Fluidleitungen 1 und 4, leicht zu handhaben.

Dennoch kann es vorkommen, daß bei nicht sorgfältiger Handhabung der Steckkupplung das Einführen der Fluidleitung 1 in die Hülse 5 bzw. das Aufstecken der Hülse 5 auf die Fluidleitung 1 nicht soweit erfolgt, daß die Haken 20 der Rastarme 18, 19 die Halterippe 2 hintergreifen. Wenn die Steckkupplung in einem Kraftfahrzeug verwendet wird, würde sich dies erst bei einem Druckaufbau in den vermeintlich durch die Steckkupplung verbundenen Fluidleitungen 1 und 4 herausstellen, indem sich die Fluidleitungen trennen und das Fluid ausströmt. Bei einem Fluid wie Kühlwasser, Kraftstoffe oder Bremsöl kann dies zu erheblichen Schäden führen.

Erfindungsgemäß wird daher, vorzugsweise beim Hersteller der Steckkupplung, nach dem Zusammenbau von Hülse 5 und Rasteinrichtung 6, in der zurückgezogenen Lage der Rasteinrichtung 6 in der Hülse 5 nach Fig. 1, die Klammer 36 so auf die Hülse aufgesetzt, daß die Vorsprünge 38 der Schenkel 37 in jeweils einen der Durchbrüche 13 bis in den Bereich zwischen der inneren Vorderkante der Durchbrüche 13 und der Schrägfläche 21 der Rastarme 19 ragen.

Der Monteur, der die Verbindung der Fluidleitungen, z.B. in einem Kraftfahrzeug, mittels der Steckkupplung herstellen soll, wird verpflichtet, nach dem Zusammenstecken von Fluidleitung 1 und Hülse 5, die Fluidleitung 1 zurückzuziehen, wie wenn er sie zwecks Entkupplung aus der Hülse wieder herausziehen wollte. Wenn die Fluidleitung 1 richtig eingekuppelt ist, d.h. ihre Halterippe 2 mit den Rastarmen 19 (und damit auch mit den Rastarmen 18) verrastet ist, läßt sich die Fluidleitung 1 nicht wieder völlig aus der Hülse herausziehen, ohne die Steckkupplung auf vorschriftsmäßige Weise, wie vorstehend beschrieben, zu entriegeln. Zum Beweis bzw. als Anzeichen dafür, daß der Monteur diesen Entkupplungsversuch durchgeführt hat, muß er die Klammer 36 von der Hülse 5 abziehen. Die Klammer 36 läßt sich jedoch nur dann abziehen, wenn er die Fluidleitung 1 richtig eingeführt und beim Zurückziehen die Rastvorrichtung 6 bis zum Anschlag der Schrägflächen 21 der Rastarme 19 (einschließlich der Schrägflächen 21 der Rastarme 18) an der Innenkante der Durchbrüche 13 (bzw. der Vertiefungen 12) zurückgezogen hat, weil die Schrägflächen 21 der Rastarme 19 dabei gegen die Vorsprünge 38 an den Schenkeln 37 der Klammer 36 drücken und die Schenkel 37 soweit aufspreizen, daß die Vorsprünge 38 mit den Durchbrüchen 13 durch Abziehen der Klammer 26 von der Hülse 5 außer Eingriff gebracht werden können. Wenn die Fluidleitung 1 dagegen nicht soweit in die Hülse 5 eingeführt wurde, daß die Halterippe 2 mit den Rastarmen 18, 19 verrasten konnte, läßt sich die Fluidleitung 1 wieder aus der Hülse 5 herausziehen, aber die Klammer nicht von der Hülse abziehen, weil ihre Vorsprünge 38 weiterhin mit den Durchbrüchen 13 in Eingriff bleiben, da die Rastarme 18, 19 mangels Verrastung mit der Halterippe 6 nicht bis zum Anschlag ihrer Schrägflächen mit vorgezogen wurden. Wenn die Klammer 36 nach dem Einführen der mit der Halterippe 2 versehenen Fluidleitung 1 in die Hülse 5 entfernt ist, stellt dies bei einer Nachprüfung vor der Inbetriebnahme, z.B. eines mit der Steckkupplung ausgerüsteten Kraftfahrzeugs, ein deutlich sichtbares Anzeichen für den vorschriftsmäßigen Einkupplungszustand dar.

Nachdem Aufsetzen der Klammer 36 auf die Hülse 5 erschweren die an jeweils einer Wand 41 der Durchbrüche 13 anliegenden Widerlager 40, insbesondere aufgrund ihrer Ausbildung als spitze Kante, ein unabsichtliches Abziehen der Klammer 36 von der Hülse 5 vor dem Aufspreizen ihrer Schenkel 37, weil zwischen den Widerlagern 40 und den Wänden 41 eine relativ hohe Reibung auftreten würde. Dagegen erleichtern die Auflaufschrägen 42 das Abziehen der Klammer 36 in der aufgespreizten Lage ihrer Schenkel 37 nach den Fig. 2 und 4, weil die Auflaufschrägen 42 beim Abziehen leichter über die äußeren Ränder der Wände 41 hinweggleiten.

Die Auflaufschrägen 43 der Vorsprünge 38 erleichtern dagegen das Aufspreizen der Schenkel 37 der Klammer 36 beim Vorziehen der Rasteinrichtung 6 in die Lage nach Fig. 2.

Der Griff 44 am Querteil 39 der Klammer 36 erleichtert das Abziehen der Klammer 36 von Hand.

Weitere Auflaufschrägen 48 an denjenigen Enden der Vorsprünge 38, die dem Querteil 39 der Klammer 36 abgekehrt sind, erleichtern das Aufsetzen der Klammer auf die Hülse 5, wobei die Auflaufschrägen 48 über die zylindrische Außenseite der Hülse 5 unter Aufspreizung der Schenkel 37 hinweggleiten, bis die Vorsprünge 38 in die Durchbrüche 13 einrasten.

Die L-förmigen Ansätze 45 stellen das Aufsetzen der Klammer 36 in einer definierten Lage und die Einhaltung dieser Lage, die in Fig. 1 dargestellt ist, unter Anlage der Abschnitte 47 am Öffnungsrad der Hülse 5 sicher.

## Patentansprüche

1. Steckkupplung zum Verbinden zweier Fluidleitungen (1, 4), von denen wenigstens die eine Fluidleitung (1) eine Halterippe (2) aufweist, mit einer Hülse (5), die radiale Durchbrüche (13) aufweist, mit einer in der Hülse (5) axial verschiebbar geführten Rasteinrichtung (6), die an einem Ring (17) sich axial erstreckende Rastarme (19) mit einem am freien Ende ausgebildeten Haken (20) zum Hintergreifen der Halterippe (2) jener einen in die Rasteinrichtung (6) axial eingeführten Fluidleitung (1) aufweist, wobei die Haken (20) an ihrem freien Ende eine radial äußere Schrägfläche (21), die beim Auseinanderbewegen von Hülse (5) und Rasteinrichtung (6) gegen eine innere Vorderkante eines einen radial äußeren Teil des Hakens (20) axial verschiebbar aufnehmenden Durchbruchs (13) der Hülse (5) gedrückt wird, und eine radial innere Schrägfläche (23) aufweisen, die mit der Halterippe (2) beim Auseinanderziehen von Rasteinrichtung (6) und Hülse (5) bei eingeführter Fluidleitung (1) zur Anlage kommt, so daß die Rastarme (19) in einer in die Hülse (5) axial zurückgezogenen Entriegelungslage der Rasteinrichtung (6), in der die Haken (20) mit ihrer radial äußeren Schrägfläche (21) nicht gegen die vordere Kante des betreffenden Durchbruchs (13) gedrückt sind, gespreizt werden und ein Entkuppeln ermöglichen, **dadurch gekennzeichnet, daß** eine etwa U-förmige, elastische Klammer (36), die an ihren Schenkeln (37) mit je einem Vorsprung (38) versehen ist, in der Entriegelungslage der Rasteinrichtung (6) so auf die Hülse (5) aufgesetzt ist, daß ihre Vorsprünge in jeweils einen der Durchbrüche (13) bis in den Bereich zwischen der inneren Vorderkante der Durchbrüche (13) und der Schrägfläche (21) der Rastarme (19) ragen.

2. Steckkupplung nach Anspruch 1, **dadurch gekennzeichnet, daß** die Vorsprünge (38) der Klammer (36) an derjenigen Seite, die dem die beiden Schenkel (37) verbindenden Querteil (39) zugekehrt ist, ein Widerlager (40) zur Anlage an der einen Wand (41) der Durchbrüche (13) und eine sich daran anschließende Auflaufschräge (42) zum Hochgleiten der Vorsprünge (37) auf dem äußeren Rand dieser Wand (41) beim Abziehen der Klammer (36) von der Hülse (5) aufweisen.

3. Steckkupplung nach Anspruch 2, **dadurch gekennzeichnet, daß** das Widerlager (40) zusammen mit der Auflaufschräge (42) eine spitze Kante bildet.

4. Steckkupplung nach einem der Ansprüche 1 bis 3, **dadurch gekennzeichnet, daß** die den Schrägflächen (21) der Rastarme (19) zugekehrten Seiten der Vorsprünge (38) als Auflaufschrägen (43) ausgebildet sind.

5. Steckkupplung nach einem der Ansprüche 1 bis 4, **dadurch gekennzeichnet, daß** das die beiden Schenkel (37) der Klammer (36) verbindende Querteil (39) mit einem Griff (44) versehen ist.

6. Steckkupplung nach einem der Ansprüche 1 bis 5, **dadurch gekennzeichnet, daß** die Schenkel (37) und das sie verbindende Querteil (39) der Klammer (36) jeweils mit einem L-förmigen Ansatz (45) versehen sind, dessen einer Abschnitt (46) sich senkrecht zur Ebene der Klammer (36) und dessen anderer Abschnitt (47) sich parallel zu dieser Ebene ins Innere der Klammer (36) erstreckt und bei auf die Hülse (5) aufgesetzter Klammer (36) am freien Ende der Hülse (5) anliegt.

7. Steckkupplung nach einem der Ansprüche 1 bis 6, **dadurch gekennzeichnet, daß** die Klammer (36) Kunststoff aufweist und eine andere Farbe als die übrigen Kupplungsteile hat.

## Claims

1. Plug-in coupling for connecting two conduits (1, 4) for fluids, of which at least one fluid conduit (1) has a securing rib (2), wherein the plug-in coupling comprises a sleeve (5) having radial openings (13) and further comprises a locking device (6) axially slidably guided in the sleeve (5), the locking device (6) has a ring (17) provided with axially extending locking arms (19) provided with a hook (20) on the free end for engaging behind the securing rib (2) of that one fluid conduit (1) axially introduced into the locking device (6), the hooks (20) have on their free end a radially outer slanted surface (21) which, upon moving apart the sleeve (5) and the locking device (6), is pressed against an inner leading edge of an opening (13) of the sleeve (5), which opening receives a radially outer part of the hook (21) in an axially movable way, and a radial inner slanted surface (23) which contacts the securing rib (2) upon pulling apart the locking device (6) and the sleeve (5) when the fluid conduit is inserted so that the locking arms (19), in a release position of the locking device (6) in which it is axially retracted into the sleeve (5) and in which the hooks (20) are not pressed with their radially outer slanted surface (21) against the leading edge of the corresponding opening (13), are spread apart and enable decoupling, **characterised in that** a substantially U-shaped elastic clip (36), provided at its legs (37) with a projection (38), respectively, is positioned in the release position of the locking device (6) on the sleeve (5) such that its projections project into one of the openings (13), respectively, up to the region between the inner leading edge of the openings (13) and the slanted surface (21) of the locking arms (19).

2. Plug-in coupling according to claim 1, **characterised in that** the projections (38) of the clip (36) on that side facing the transverse member (39) connecting the two legs (37) have an abutment (40) for contact on one wall (41) of the openings (13) and an adjoining guiding slant (42) for gliding of the projections (38) onto the outer edge of this wall (41) upon removal of the clip (36) from the sleeve (5).

3. Plug-in coupling according to claim 2, **characterised in that** the abutment forms a pointed edge together with the guiding slant (42).

4. Plug-in coupling according to one of the claims 1 to 3, **characterised in that** the sides of the projections (38) facing the slanted surfaces (21) of the locking arms (19) are formed as guiding slants (43).

5. Plug-in coupling according to one of the claims 1 to 4, **characterised in that** the transverse member (39) connecting the two legs (37) of the clip (36) is provided with a grip (44).

6. Plug-in coupling according to one of the claims 1 to 5, **characterised in that** the legs (37) of the clip (36) and the transverse member (39) connecting them are provided with an L-shaped projection (45) respectively, whose one section (46) extends perpendicularly to the plane of the clip (36) and whose other section (47) extends parallel to this plane and rests against the free end of the sleeve (5) when the clip (36) is placed onto the sleeve (5).

7. Plug-in coupling according to one of the claims 1 to 6, **characterised in that** the clip (36) comprises plastic material and has a colour different from the colour of the other coupling parts.

## Revendications

1. Raccord emboîtable destiné à connecter deux conduites de fluide (1, 4), parmi lesquelles au moins une des conduites de fluide (1) comprend une nervure de maintien (2), avec une douille (5) qui comprend des passages radiaux (13), avec un système d'enclenchement (6) guidé de façon mobile dans le sens axial dans la douille (5), lequel système comprend des bras d'enclenchement (19) s'étendant dans le sens axial sur une bague (17), pourvus d'un crochet (20) conçu sur l'extrémité libre, destiné à mettre en prise l'arrière de la nervure de maintien (2) d'une de ces conduites de fluide (1) insérée dans le sens axial dans le système d'enclenchement (6), les crochets (20) comprenant sur leur extrémité libre une surface oblique (21) radialement externe, qui, lorsque la douille (5) et le système d'enclenchement (6) s'écartent l'une de l'autre, est pressée contre une arête avant interne d'un passage (13) de la douille (5) recevant de façon mobile dans le sens axial une partie radialement externe du crochet (20), et une surface oblique (23) radialement interne, qui vient en appui avec la nervure de maintien (2), lorsque le système d'enclenchement (6) et la douille (5) s'éloignent l'une de l'autre à l'introduction de la conduite de fluide, de sorte que les bras d'enclenchement (19), dans une position de déverrouillage du système d'enclenchement (6) en retrait dans le sens axial dans la douille (5), système dans lequel les crochets (20) ne sont pas pressés avec leur surface oblique (21) radialement externe contre l'arête avant du passage (13) en question, sont écartés et permettent un découplage, **caractérisé en ce qu'**une bride de fixation (36) élastique, quelque peu en forme de U, qui est pourvue sur chacune de ses branches (37) d'une saillie (38), est placée, dans la position de déverrouillage du système d'enclenchement (6), sur la douille (5), de sorte que ses saillies dépassent dans chaque passage (13) jusque dans la zone située entre l'arête avant interne des passages (13) et la surface oblique (21) des bras d'enclenchement (19).

2. Raccord emboîtable selon la revendication 1, **caractérisé en ce que** les saillies (38) de la bride de fixation (36) comprennent sur le côté tourné vers la partie transversale (39) reliant les deux branches (37) une butée (40) destinée à être en appui contre une des parois (41) des passages (13) et un chanfrein vertical (42) s'y raccordant destiné à faire coulisser les saillies (37) en hauteur sur le bord extérieur de cette paroi (41) lorsque la bride de fixation (36) est retirée de la douille (5).

3. Raccord emboîtable selon la revendication 2, **caractérisé en ce que** la butée (40) forme conjointement avec le chanfrein vertical (42) une arête pointue.

4. Raccord emboîtable selon l'une quelconque des revendications 1 à 3, **caractérisé en ce que** les côtés des saillies (38) tournés vers les surfaces obliques (21) des bras d'enclenchement (19) sont conçus comme des chanfreins verticaux (43).

5. Raccord emboîtable selon l'une quelconque des revendications 1 à 4, **caractérisé en ce que** la partie transversale (39) reliant les deux branches (37) de la bride de fixation (36) est pourvue d'une poignée (44).

6. Raccord emboîtable selon l'une quelconque des revendications 1 à 5, **caractérisé en ce que** les branches (37) et la partie transversale (39) de la bride de fixation (36) les reliant sont respectivement pourvues d'un épaulement (45) en forme de L, dont une section (46) s'étend perpendiculairement au plan de la bride de fixation (36) et dont l'autre section (47) s'étend parallèlement à ce plan à l'intérieur de la bride de fixation (36) et qui, lorsque la bride de fixation (36) est montée sur la douille (5), se situe contre l'extrémité libre de la douille (5).

7. Raccord emboîtable selon l'une quelconque des revendications 1 à 6, **caractérisé en ce que** la bride de fixation (36) comprend une matière plastique et présente une couleur différente des autres parties du raccord.
